(19) Europäisches Patentamt
European Patent Office
Office européen des brevets

(11) Numéro de publication: **0 196 939**
**A1**

(12) # DEMANDE DE BREVET EUROPEEN

(21) Numéro de dépôt: **86400426.2**

(22) Date de dépôt: **27.02.86**

(51) Int. Cl.⁴: **C08G 73/10**, C08G 73/14, C08G 77/42, C08J 3/00

(30) Priorité: **01.03.85 FR 8503025**

(43) Date de publication de la demande: **08.10.86 Bulletin 86/41**

(84) Etats contractants désignés: **AT BE CH DE GB IT LI LU NL SE**

(71) Demandeur: **SOCIETE NATIONALE ELF AQUITAINE**
**Société anonyme dite**
**Tour Elf 2, Place de la Coupole La Défense 6**
**F-92400 Courbevoie(FR)**

(72) Inventeur: **Biensan, Michel**
**Lot. Les Sylvains Chemin des Vignes**
**F-64140 Lons(FR)**

(74) Mandataire: **Boillot, Marc**
**SOCIETE NATIONALE ELF AQUITAINE Division**
**Propriété Industrielle Tour Elf**
**F-92078 Paris la Défense Cédex 45(FR)**

(54) **Procédé de modification des propriétés d'un matériau polymère choisi parmi les polyimides et les polyamides-imides.**

(57) Procédé de modification des propriétés d'un matériau polymère choisi parmi les polyimides, les polyamides-imides et les polymères de l'un ou l'autre de ces deux types renfermant des motifs siloxanes dans leurs chaînes.

On soumet le matériau polymère ou un acide polyamique précurseur de ce matériau à un chauffage à une température au moins égale à 150°C et inférieure à la température de décomposition du matériau polymère, ledit chauffage étant de préférence réalisé en présence d'un agent modificateur choisi parmi les composés aromatiques polyfonctionnels ayant au moins deux groupements réactifs pris parmi $-NH_2$, -COOH, -OH et les groupements aminosecondaires avec au moins l'un des groupements représentant $-NH_2$ ou -COOH.

Le matériau polymère modifié présente, entre autres, une résistance améliorée aux solvants.

EP 0 196 939 A1

# PROCEDE DE MODIFICATION DES PROPRIETES D'UN MATERIAU POLYMERE CHOISI PARMI LES POLYIMIDES ET LES POLYAMIDESIMIDES

L'invention a pour objet un procédé de modification des propriétés d'un matériau polymère choisi parmi les polyimides et les polyamide-imides, et notamment parmi les polyimides et polyamide-imides renfermant dans leurs chaînes des motifs siloxanes. Elle concerne également le matériau polymère modifié résultant de la mise en oeuvre dudit procédé.

Il existe un grand intérêt pour des polymères tels que polyimides ou polyamide-imides qui ont un caractère thermoplastique et peuvent être transformés par des techniques conventionnelles de moulage ou encore sont solubles et peuvent être utilisés comme revêtements, adhésifs ou similaires.

On sait, comme indiqué par exemple dans les brevets américains N°s 3 699 075 et 3 812 159 au nom de Lubowitz, N° 3 847 867 au nom de Heath et al et N° 3 879 428 au nom de Heath, qu'en faisant réagir des acides polycarboxyliques aromatiques à structure diéther avec des diamines aromatiques, on produit des polyimides thermiquement stables et de poids moléculaire élevé, qui sont solubles dans les solvants organiques et fusibles. De tels polyimides sont dits être appropriés pour une utilisation dans la préparation de revêtements, d'adhésifs, de films ou similaires ou pour une transformation en pièces utiles en faisant appel à des dispositifs de moulage conventionnels. Toutefois, les polyimides connus obtenus de cette manière présentent généralement une résistance médiocre à l'égard des solvants.

On sait également, comme indiqué dans le brevet américain N° 4 395 527, que l'on peut améliorer les propriétés de polymères variés en incorporant dans les chaînes desdits polymères un motif siloxane de formule :

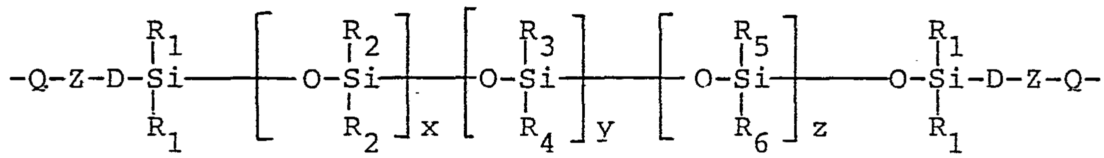

dans laquelle

Q est un groupement aromatique substitué ou non substitué,

Z désigne 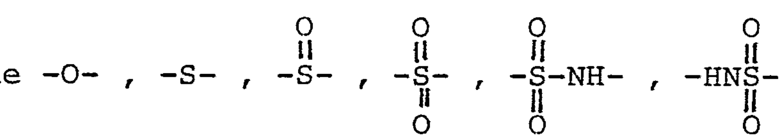

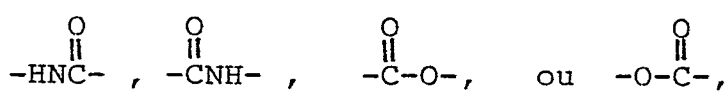

D représente un radical hydrocarbylène substitué ou non substitué,

$R_1$, $R_2$, $R_3$, $R_4$, $R_5$ et $R_6$ représentent chacun indépendamment un radical hydrocarbyle substitué ou non substitué, et

x, y et z sont des nombres ayant chacun indépendamment une valeur allant de zéro à 100.

Les polymères tels que polyimides ou polyamide-imides, qui renferment dans leurs chaînes des motifs siloxanes ayant la formule précitée, sont généralement thermoplastiques et solubles dans les solvants conventionnels.

Il serait extrêmement désirable de pouvoir modifier les propriétés de ces polyimides ou polyamide-imides, qui renferment ou non des motifs siloxanes et sont solubles et/ou thermoplastiques, pour répondre à des besoins spécifiques sans diminuer substantiellement les caractéristiques intéressantes du polymère, notamment caractéristiques mécaniques, électriques, thermiques ou autres.

La présente invention propose donc un procédé de modification des propriétés d'un matériau polymère choisi parmi ceux des polyimides, des polyamide-imides et des polymères de l'un ou l'autre de ces types renfermant des motifs siloxanes dans leurs chaînes, qui sont thermoplastiques ou façonnables et solubles dans les solvants conventionnels, ledit procédé permettant en général d'améliorer certaines propriétés du polymère sans effets préjudiciables sur ses autres propriétés.

Ainsi, en faisant appel au procédé suivant l'invention on peut, par exemple, modifier les propriétés d'un polyimide préimidisé renfermant des motifs siloxanes, appliqué sous la forme d'une solution, comme revêtement ou adhésif, sur un produit fini ou coulé en film, pour fournir un produit ou un polymère présentant une résistance améliorée aux solvants.

Le procédé suivant l'invention pour la modification des propriétés d'un matériau polymère choisi parmi les polyimides, les polyamide-imides et les polymères de l'un ou l'autre de ces deux types renfermant des motifs siloxanes dans leurs chaînes est caractérisé en ce que l'on soumet le matériau polymère ou un acide polyamique précurseur dudit matériau à un chauffage à une température au moins égale à 150°C et inférieure à la température à laquelle une décomposition du matériau polymère intervient, ledit chauffage étant effectué en présence d'au moins un agent modificateur choisi parmi les composés aromatiques polyfonctionnels, qui renferment au moins deux groupements réactifs choisis parmi $-NH_2$, -COOH, -OH et les groupements amino secondaires avec au moins l'un des groupements réactifs consistant en $-NH_2$ ou -COOH.

Comme indiqué précédemment, le procédé suivant l'invention permet de modifier et généralement d'améliorer les propriétés de polymères tels que les polyimides, les polyamide-imides et les polymères de l'un ou l'autre de ces deux types renfermant des motifs siloxanes dans leurs chaînes, qui avant modification sont thermoplastiques ou façonnables et/ou sont solubles dans les solvants conventionnels.

Comme il est bien connu, les polyimides sont obtenus par réaction d'un dianhydride sur une diamine, cette réaction conduisant à la formation de polymères constitués de motifs structuraux ayant la formule (I).

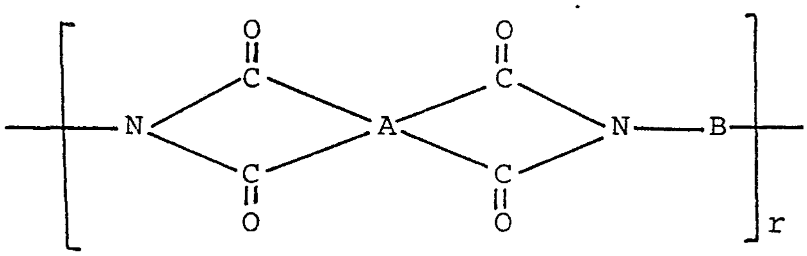 (I)

dans laquelle A est le reste tétravalent d'un anhydride d'acide tétracarboxylique, B est le reste divalent d'une amine organique, et r est un nombre entier supérieur à 1 et de préférence allant de 10 à 10 000.

Ainsi qu'on l'a déjà mentionné plus haut, le brevet américain N° 4 395 527 décrit, entre autres, des polyimides préimidisés qui renferment dans leurs chaînes des motifs siloxanes et sont thermoplastiques et/ou solubles dans les solvants organiques, lesdits motifs siloxanes répondant à la formule (II)

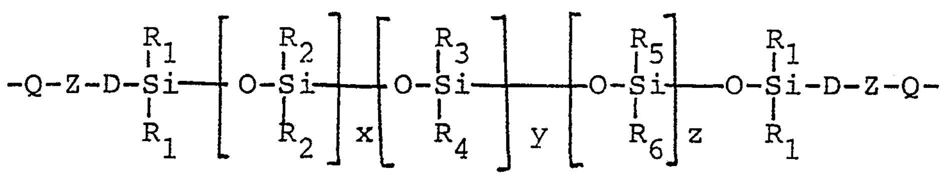 (II)

dans laquelle

Q est un groupement aromatique substitué ou non substitué,

Z désigne 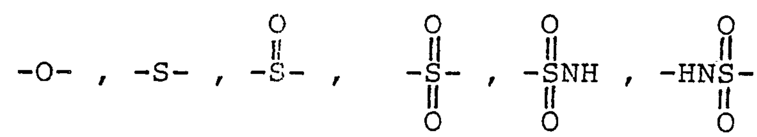

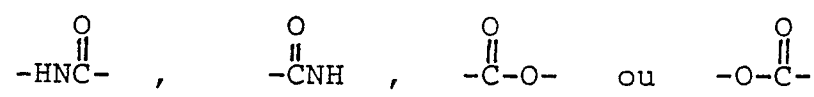

D représente un radical hydrocarbylène substitué ou non substitué,

$R_1$, $R_2$, $R_3$, $R_4$, $R_5$ et $R_6$ représentent chacun indépendamment un radical hydrocarbyle substitué ou non substitué, et

x, y et z sont des nombres ayant chacun indépendamment une valeur allant de zéro à 100.

Les polyimides, qui comportent dans leurs chaînes des motifs siloxanes de formule (II) et sont solubles dans les solvants conventionnels et/ou sont thermoplastiques, renferment, comme indiqué dans le brevet américain N° 4 395 527, le produit de réaction d'un anhydride d'un acide tétracarboxylique aromatique ou aliphatique avec un polysiloxane difonctionnel de formule (III)

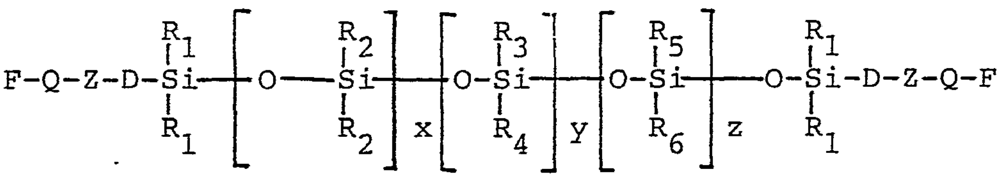

(III)

dans laquelle F représente un groupement fonctionnel tel que $NH_2$ et les autres symboles ont les significations données précédemment, et contiennent donc un ou plusieurs motifs de formule (I) où A désigne le reste tétravalent de l'anhydride d'acide utilisé et B représente le reste divalent de formule (II).

Le dianhydride utilisé dans la préparation des polyimides renfermant ou non des motifs siloxanes dans leurs chaînes peut être représenté par la formule (IV).

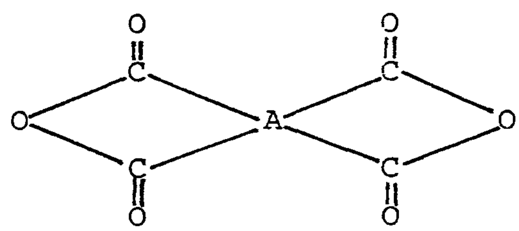

(IV)

dans laquelle A est le reste tétravalent de l'anhydride d'acide tétracarboxylique.

Les polyimides susceptibles d'être traités par le procédé suivant l'invention renferment au moins un motif de formule (I)

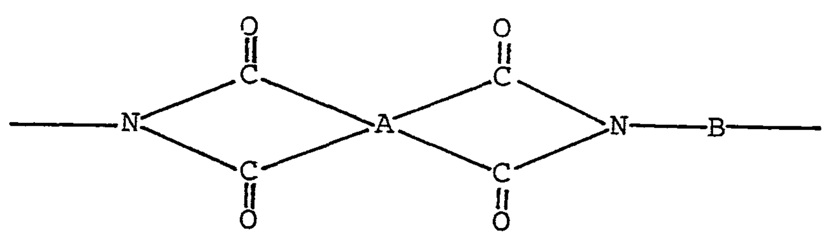

dans laquelle -B-peut représenter uniquement le reste divalent d'une ou plusieurs diamines organiques ou le motif de formule (II), qui est le reste divalent d'un bis(amino)-polysiloxane de formule (III), ou encore peut consister en partie du reste divalent d'une ou plusieurs diamines organiques et en partie du motif de formule (II).

Des diamines organiques appropriées, dont peut dériver le reste -B-par perte des groupements amino $NH_2$, peuvent être représentées par la formule générale (V)

$H_2N$ -Y -$NH_2$ (V)

dans laquelle -Y-est un reste divalent qui peut être aliphatique, notamment alcoylène en $C_1$ à $C_{20}$, ou cycloalcoylène en $C_4$ à $C_8$ et qui, de préférence, est le reste divalent d'une diamine aromatique.

Le reste divalent -Y-dérivant d'une diamine aromatique peut être choisi parmi les restes divalents dérivés d'un hydrocarbure aromatique monocyclique ou polycyclique en $C_6$ à $C_{14}$ tel que benzène, naphtalène, ou anthracène, ledit hydrocarbure pouvant être substitué par des groupements non réactifs tels que des radicaux alcoyles inférieurs. Des exemples de tels restes sont notamment phénylène, diphénylène, naphtylène.

Le reste divalent -Y-peut être également un groupement de formule (VI)

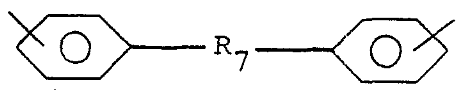

(VI)

dans laquelle $R_7$ peut représenter un groupement divalent choisi parmi :

-les radicaux alcoylènes linéaires ou ramifiés en $C_1$ à $C_{20}$ et les groupements

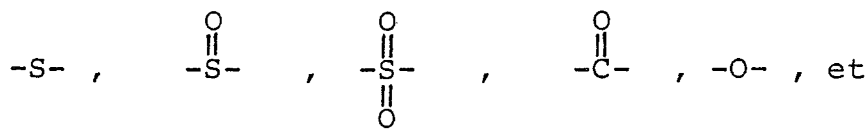

-les groupements -O-G'O-pour lesquels G' est un reste phénylène ou un reste de formule (VII)

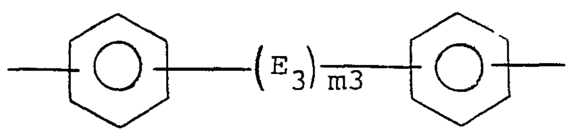

(VII)

dans laquelle $m_3$ est égal à zéro ou 1 et $E_3$ est choisi parmi

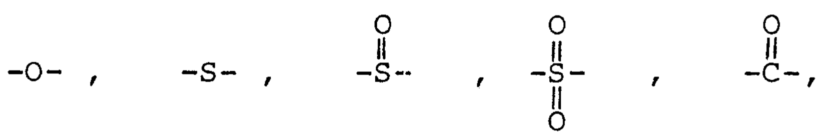

et les radicaux alcoylènes linéaires ou ramifiés en $C_1$ à $C_8$.

Lorsque le reste -Y-comporte un ou plusieurs noyaux aryles, le ou lesdits noyaux peuvent être éventuellement substitués par des groupements du type alcoyles inférieurs, alcoxy inférieurs ou autres radicaux non réactifs.

Le reste divalent -Y-peut également dériver d'un composé aromatique hétérocyclique en $C_6$ à $C_{20}$ comportant un ou plusieurs hétéroatomes choisis parmi N, O et S, comme par exemple pyridine, pyrimidine, pyrazine, oxadiazine, oxathiazine, triazine, benzofuranne, thionasphtène, indole, quinoline, benzoxazole, benzothiophène et carbazole.

Des exemples de diamines organiques répondant à la formule (V) et utilisables seules ou en mélanges sont tels que :

m-phénylène diamine

p -phénylène diamine

diamino -4,4' diphénylpropane

diamino -4,4' diphénylméthane

diamino -1,4 cyclohexane

diamino -1,12 octadécane

bis (amino -3 propyl) sulfure

N-méthyl bis (amino-3 propyl) amine

hexaméthylène diamine

heptaméthylène diamine

nonaméthylène diamine

benzidine

diamino -4,4' diphényl sulfure

diamino -4,4' diphénylsulfone

diamino -4,4' diphényléther

diamino -1,5 naphtalène

diméthyl -3,3' benzidine

diméthoxy -3,3' benzidine

bis (amino -t -butyl) -2,4 toluène

bis (p-amino-t-butyl) phényl éther

bis (p-méthyl -o-aminopentyl) benzène

diamino - 1,3 isopropyl -4 benzène

bis (amino -3 propoxy) -1,2 éthane

m-xylylènediamine

p-xylylènediamine

bis (amino -4 cyclohexyl) méthane

décaméthylènediamine

méthyl -3 heptaméthylènediamine

diméthyl -4-4' heptaméthylènediamine

diamino -2,11 dodécane

diméthyl -2,2 propylène diamine

octaméthylènediamine

méthoxy -3 hexaméthylènediamine

diméthyl -2,5 hexaméthylènediamine

diméthyl -2,5 heptaméthylène diamine

méthyl -5 nonaméthylènediamine

diamino -2,4 chlorobenzène

diamino -2,4 thiophénol

diamino -2,4 phénol

acide diamino -3,5 benzoique

diamino -2,4 benzoate de méthyle

diamino -2,4 acétamide

(p - carbométhoxy phénoxy) -1 diamino -2,4 benzène

p -(diamino -2,4 phénoxy) acétanilide

mercapto -3 diamino -4,4' biphényle (cyano -2' phényl) -1 diamino -2,5 naphtalène

Comme indiqué précédemment -B-peut représenter en partie ou en totalité un motif siloxane de formule (II).

En particulier dans ladite formule (II) définissant le motif siloxane :

. Q peut être un groupement divalent carbocyclique aromatique possédant 6 à 18 atomes de carbone dans le noyau ou un groupement divalent hétérocylique aromatique ayant 5 à 18 atomes dans le noyau et comportant au moins un hétéroatome choisi parmi N, O et S, lesdits groupements carbocyclique et hétérocyclique aromatiques pouvant être non substitués ou encore substitués par un ou plusieurs substituants choisis parmi les radicaux alcoyles en $C_1$ à $C_{12}$, alcényles en $C_2$ à $C_{12}$, alcynyles en $C_2$ à $C_{12}$, cycloalcoyles en $C_4$ à $C_8$, alcoxy en $C_1$ à $C_{12}$, alcoylthio en $C_1$ à $C_{12}$, phényle, alcoylphényl ayant 1 à 12 atomes de carbone dans le reste alcoyle, phénoxy, phénylthio, alcoyl-carbonyloxy en $C_2$ à $C_{12}$, phénylalcoyles ayant 1 à 12 atomes de carbone dans le reste alcoyle, alcoylcarbonyl en $C_2$ à $C_{12}$, alcoxycarbonyl en $C_2$ à $C_{12}$, bromo, chloro, fluoro, iodo, nitro, cyano, cyanothio, carboxy, carbonyle, hydroxyle, mercapto, formyle, thioformyle et mercaptocarbonyle,

. D est un radical hydrocarbylène substitué ou non substitué en $C_1$ ou en $C_2$ à $C_{18}$ et de préférence un radical alcoylène linéaire ou ramifié en $C_1$ ou en $C_3$ à $C_{12}$, et

. les $R_1$, $R_2$, $R_3$, $R_4$, $R_5$ et $R_6$ représentent chacun, indépendamment, un radical choisi parmi les radicaux hydrocarbyles comprenant les radicaux alcoyles en $C_1$ à $C_{12}$, alcényles en $C_2$ à $C_{12}$, alcynyles en $C_2$ à $C_{12}$, cycloalcoyles en $C_4$ à $C_8$, phényle, alcoylphényles ayant 1 à 12 atomes de carbone dans le reste alcoyle, phénylalcoyles ayant 1 à 12 atomes de carbone dans le reste alcoyle, alcénylphényles ayant de 2 à 12 atomes de carbone dans le reste alcényle, et les radicaux dérivant de l'un ou l'autre des radicaux hydrocarbyles précités par substitution d'un ou plusieurs de leurs atomes d'hydrogène par Br, Cl, F, I, -NC, --$NO_2$, -OCN, alcoxy en $C_1$ à $C_8$,

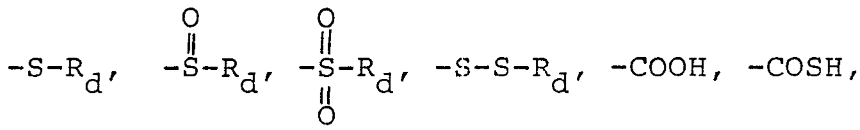

$-CSOH$, $-CONH_2$, $-CN$, $-CHO$, $-CHS$, $-OH$, $-SH$, $-NCO$

et 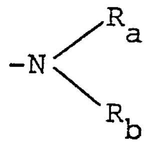 où $R_a$ et $R_b$ représentent chacun

indépendamment un atome d'hydrogène ou un radical alcoyle inférieur et $R_d$ désigne un radical alcoyle en $C_1$ à $C_8$.

Pour les motifs siloxanes ainsi définis D est de préférence un radical alcoylène linéaire ou ramifié en $C_1$ ou en $C_3$ à $C_{12}$ ou/et les nombres x, y et z sont plus spécialement tels que $0 \leq x \leq 100$, $0 \leq y \leq 20$ et $0 \leq z \leq 20$ et en particulier égaux chacun à zéro. Avantageusement pour ces motifs siloxanes $R_1$ est un radical hydrocarbyle non substitué en $C_1$ à $C_{18}$, $R_2$ est un alcoyle en $C_1$ à $C_{12}$, $R_3$ désigne un radical phényle, alcoylphényle en $C_7$ à $C_{18}$ ou alcoyle en $C_1$ à $C_{12}$, $R_4$ représente un radical alcoyle en $C_1$ à $C_{12}$, phényle, alcoylphényle en $C_7$ à $C_{18}$ ou alcényle en $C_2$ à $C_{12}$, $R_5$ est un radical alcényle en $C_2$ à $C_{12}$ ou un alcoyle substitué en $C_1$ à $C_{12}$ et $R_6$ est un radical alcoyle en $C_1$ à $C_{12}$, phényle, alcoylphényle en $C_7$ à $C_{18}$ ou alcényle en $C_2$ à $C_{12}$.

Des motifs siloxanes préférés sont définis par la formule (VIII) ci-après :

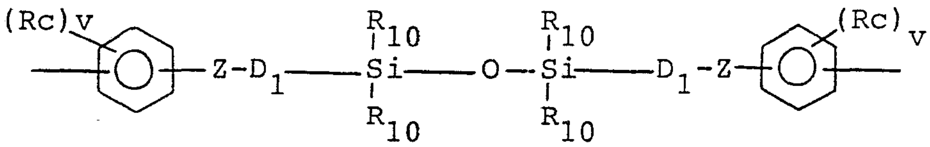

(VIII)

dans laquelle Z a la signification donnée précédemment, v est un nombre allant de zéro à 4, les $R_c$, identiques ou différents, sont choisis parmi les radicaux alcoyles inférieurs, alcényles inférieurs, alcynyles inférieurs, cycloalcoyles en $C_4$ à $C_8$, alcoxy inférieurs, alcoylthio inférieurs, phényle, alcoylphényles inférieurs, phényl-alcoyles inférieurs, alcénylphényles inférieures, phénoxy, phénylthio, alcoylcarbonyles inférieurs, alcoylcarbonyloxy inférieurs, alcoxycarbonyles inférieurs, bromo, chloro, fluoro, iodo, nitro, cyano, cyanothio, carboxyle, carbonyle, hydroxyle, mercapto ou mercaptocarbonyle, $D_1$ est un radical méthylène ou un radical alcoylène en $C_3$ à $C_8$, et $R_{10}$ est un radical choisi parmi les radicaux alcoyles inférieurs, alcényles inférieurs, alcynyles inférieurs, phényle, alcoylphényles inférieurs, phénylalcoyles inférieurs et alcénylphényles inférieurs.

Parmi les motifs siloxanes définis par la formule (VIII) on peut citer en particulier ceux pour lesquels v est égal à zéro ou 1 et $R_{10}$ est un alcoyle inférieur et tout spécialement, parmi ces derniers motifs, ceux pour lesquels en outre Z représente -O-, avec pour exemples les motifs de formule (VIII) pour lesquels v est égal à zéro ou 1, de préférence zéro, Z représente -O-, $D_1$ désigne un reste méthylène, propylène ou butylène, de préférence méthylène, et $R_{10}$ est un alcoyle en $C_1$ à $C_3$, de préférence méthyle.

Comme indiqué dans le brevet américain N° 4 395 527, dans les dianhydrides de formule (IV)

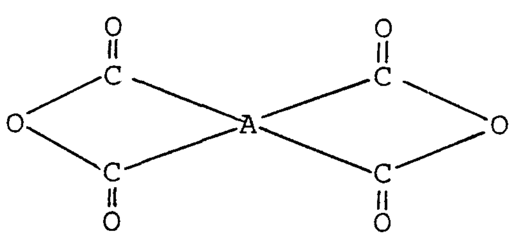

(IV)

susceptibles de réagir avec les diamines de formule (V) et/ou les diamines de formule (III) renfermant des motifs siloxanes pour former les polyimides que l'on peut modifier par le procédé suivant l'invention, le reste A est un radical tétravalent choisi parmi les groupements substitués ou non substitués aliphatiques, cycloaliphatiques, hétérocycliques, aromatiques et leurs combinaisons.

Ainsi A peut être un radical tétravalent dérivant du benzène ou du naphtalène ou un groupement tétravalent de formule (IX)

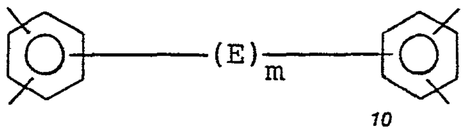

(IX)

dans laquelle m est égal à zéro ou 1 et E est choisi parmi les groupements

$-O-$ , $-S-$ , 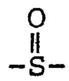 , 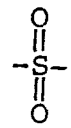 , 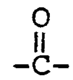 , ou $C_sH_{2s}$

où s est un nombre entier allant de 1 à 8.

Le reste A peut être également un radical tétravalent de formule (X)

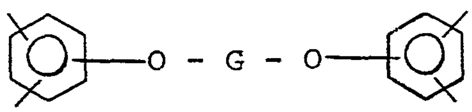

(X)

dans laquelle G est un radical phénylène ou un groupement de formule (XI)

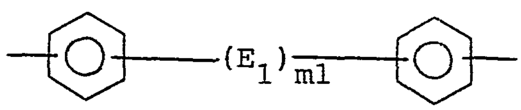

(XI)

dans laquelle $m_1$ est égal à zéro ou 1 et $E_1$ est choisi parmi les mêmes groupements que E.

Les dianhydrides ayant la formule (IV) peuvent également avoir un caractère essentiellement aliphatique comme, par exemple, le dianhydride de l'acide cyclopentane tétracarboxylique, le dianhydride de l'acide cyclohexane tétracarboxylique et le dianhydride de l'acide butane tétracarboxylique.

Des exemples de dianhydrides de formule (IV) susceptibles de fournir des restes A appropriés pour les polyimides de formule (I) et utilisables seuls ou en mélanges sont tels que :

dianhydride pyromellitique,

dianhydride de l'acide benzophénone tétracarboxylique -3, 3', 4, 4',

dianhydride de l'acide diphényltétracarboxylique -2, 2', 3, 3',

dianhydride de l'acide diphényltétracarboxylique -3,3', 4, 4',

dianhydride de l'acide benzophénonetétracarboxylique -2, 2', 3, 3',

dianhydride de l'acide bis (dicarboxy-3,4 phényl) -2,2 propane,

dianhydride de l'acide bis (dicarboxy -2,3 phényl) -2,2 propane,

dianhydride de l'acide bis (dicarboxy -3,4 phényl)éther,

dianhydride de l'acide bis (dicarboxy -3,4 phényl)sulfone,

dianhydride de l'acide bis(dicarboxy -3,4 phényl)sulfure,

dianhydride de l'acide bis (dicarboxy -2,3 phényl)-1,1 éthane,

dianhydride de l'acide bis (dicarboxy -3,4 phényl) -1,1éthane,

dianhydride de l'acide bis (dicarboxy -2,3 phényl) méthane,

dianhydride de l'acide bis (dicarboxy -3,4 phényl) méthane,

dianhydride de l'acide tétracarboxy -2,3,6,7 naphtalène,

dianhydride de l'acide tétracarboxy -1,2,4,5 naphtalène,

dianhydride de l'acide tétracarboxy -1,2,5,6 naphtalène,

dianhydride de l'acide tétracarboxy -1,2,3,4 benzène,

dianhydride de l'acide tétracarboxy -3,4,9,10 perylène,

dianhydride de l'acide tétracarboxy -2,3,5,6 pyrazine,

dianhydride de l'acide tétracarboxy -2,3,4,5 thiophène,

dianhydride de l'acide tétracarboxy -1,4,5,8 naphtalène,

dianhydride de l'acide tétracarboxy -1,4,5,8 décahydro-naphtalène,

dianhydride de l'acide tétracarboxy -1,2,5,6 diméthyl -4,8 hexahydro -1,2,3,5,6,7 naphtalène,

dianhydride de l'acide tétracarboxy -1,4,5,8 dichloro -2,6 naphtalène

dianhydride de l'acide tétracarboxy -1,4,5,8 dichloro -2,7 naphtalène,

dianhydride de l'acide tétracarboxy -1,4,5,8 tétrachloro -2,3,6,7 naphtalène,

dianhydride de l'acide tétracarboxy -1,8,9,10 phénanthrène,

dianhydride de l'acide tétracarboxy -1,2,3,4 cyclopentane,

dianhydride de l'acide tétracarboxy -2,3,4,5 pyrrolidine,

dianhydride de l'acide tétracarboxy -1,2,3,4 butane,

dianhydride de l'acide azobenzène tétracarboxylique,

dianhydride de l'acide tétracarboxy -2,3,4,5 tétrahydrofuranne,

l'anhydride de p-phénylène bis (trimellitate),

l'anhydride d'éthylène -1,2 bis triméllitate,

l'anhydride de propane -2,2 bis(p-phénylènetrimellitate),

l'anhydride de l'acide 4,4' [ p-phénylène bis(phényl imino) carbonyl diphtalique],

dianhydride de l'acide bis [ (dicarboxy -3,4 phénoxy) -4 phényl ] -2,2 propane,

dianhydride de l'acide bis (dicarboxy -3,4 phénoxy) -1,4 benzène,

dianhydride de l'acide bis (dicarboxy -3,4 phénoxy) -4,4' diphényle,

dianhydride de l'acide bis [ (dicarboxy-3,4 phénoxy)-4 phényl ] sulfone,

dianhydride de l'acide bis [ (dicarboxy-3,4 phénoxy)-4 phényl ] sulfure.

Sont également susceptibles d'être modifiés par le procédé suivant l'invention des polyimides comportant des motifs polysiloxanes tels que ceux décrits, par exemple, dans le brevet américain N° 3 847 867. De tels polyimides sont des polyétherimides de formule générale (I) dans laquelle A est un reste tétravalent de formule (XII).

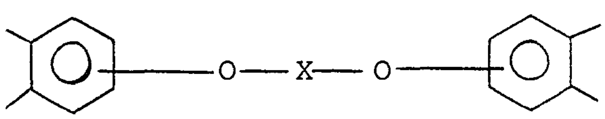

(XII)

dans laquelle X est un radical aromatique divalent choisi parmi certaines classes de groupements phényles substitués, de groupements biphényles substitués et de groupements phényles pontés, et B représente le reste divalent d'une diamine organique comportant un polydiorganosiloxane terminé par une chaîne alcoylène en $C_3$ à $C_8$ tel que celui dérivé d'un di(aminoalcoyl) polysiloxane de formule générale (XIII)

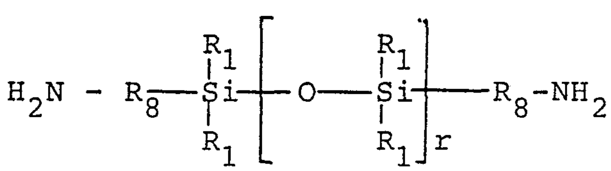

(XIII)

dans laquelle $R_1$ a la signification donnée précédemment, $R_8$ est un radical hydrocarboné divalent et r est un entier égal ou supérieur à 1.

Peuvent être également modifiés par le procédé de l'invention des produits du type polyamide-imides renfermant ou non dans leurs chaînes des motifs polysiloxanes linéaires et en particulier les polyamide-imides renfermant des motifs polysiloxanes linéaires qui sont décrits et illustrés dans le brevet américain N° 4 395 527.

Les polyamide-imides sont obtenus par réaction d'une diamine organique sur un anhydride d'acide tricarboxylique, cette réaction conduisant à la formation de polymères constitués de motifs structuraux de formule (XIV).

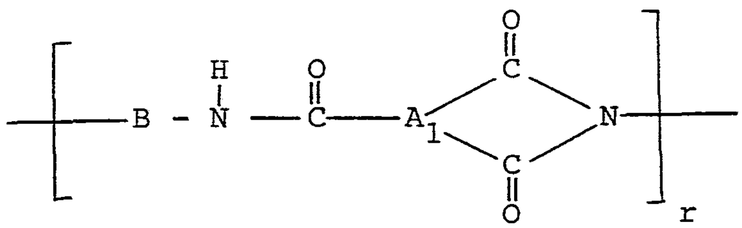

(XIV)

dans laquelle $A_1$ est le radical organique trivalent dérivant d'un anhydride d'acide tricarboxylique, B est un reste divalent d'une diamine organique ayant l'une ou l'autre des significations données précédemment et r est un entier supérieur à 1 et allant de préférence de 10 à 10 000.

Des exemples d'anhydrides d'acides tricarboxyliques, qui peuvent réagir avec des diamines organiques pour former des polyamide-imides susceptibles d'être traités par le procédé suivant l'invention, sont notamment tels que :

anhydride triméllitique,

anhydride de l'acide tricarboxy -2, 6, 7 naphtalène,

anhydride de l'acide tricarboxy -3, 3', 4 diphényle,

anhydride de l'acide tricarboxy -3, 3', 4 benzophénone,

anhydride de l'acide tricarboxy -1, 3, 4 cyclopentane,

anhydride de l'acide tricarboxy -2, 2', 3 diphényle,

anhydride de l'acide tricarboxy -3, 3', 4 diphényl-sulfone,

anhydride de l'acide tricarboxy -3, 3', 4 diphényl -2,2 propane,

anhydride de l'acide propylène tricarboxylique,

anhydride de l'acide éthylène tricarboxylique,

anhydride de l'acide tricarboxy -3, 3', 4 diphényléther.

Conviennent également les acides correspondant à ces anhydrides d'acides tricarboxyliques ainsi que les anhydrides de triacides analogues des anhydrides à groupements diéthers décrits précédemment comme appropriés pour former des polyimides.

La diamine organique, susceptible de réagir avec l'anhydride d'acide tricarboxylique pour former le polyamide-imide peut être choisie parmi les diamines de formule générale $H_2N$ -Y-$NH_2$ définies précédemment.

Une partie ou la totalité de la composante diamine organique utilisée pour former les polyamide-imides peut consister en un bis (aminosiloxane) de formule (III) ou en un di(aminoalcoyl) polysiloxane ayant la formule (XIII) définie plus haut ; de même une partie de la composante anhydride peut consister en un anhydride d'acide tricarboxylique renfermant des motifs siloxanes dans sa molécule.

Comme déjà indiqué, le procédé suivant l'invention permet de modifier et d'améliorer les propriétés d'un matériau polymère choisi parmi les polyimides et les polyamides-imides définis précédemment en soumettant ledit matériau polymère ou un acide polyamique précurseur de ce matériau à un chauffage à une température au moins égale à 150°C et inférieure à la température de décomposition du matériau polymère, le chauffage du matériau polymère ou de son précurseur étant réalisé en présence d'au moins un agent modificateur choisi parmi les composés aromatiques polyfonctionnels définis généralement plus haut.

Des composés aromatiques polyfonctionnels susceptibles d'être utilisés comme agents modificateurs suivant l'invention peuvent être choisis parmi les polyamines aromatiques, les aminoacides aromatiques, les acides polycarboxyliques aromatiques, les aminophénols et les phénols carboxylés et de préférence parmi ceux desdits composés, qui ne réagissent pas avec le matériau polymère ou son précurseur dans les conditions ambiantes.

Le noyau des composés aromatiques polyfonctionnels utilisables comme agents modificateurs, c'est-à-dire le radical aromatique qui dérive de l'agent modificateur polyfonctionnel par pertes des groupements réactifs, peut être avantageusement un radical aromatique di-, tri-ou tétravalent renfermant de 6 à 20 atomes de carbone.

A titre d'exemples on peut citer les radicaux suivants

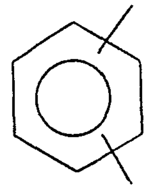 , 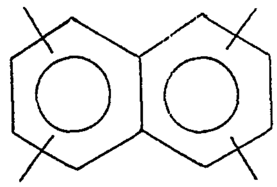 , 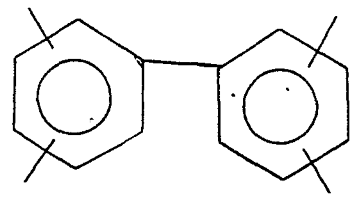 ,

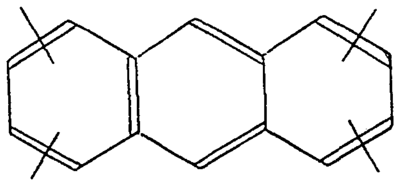 , 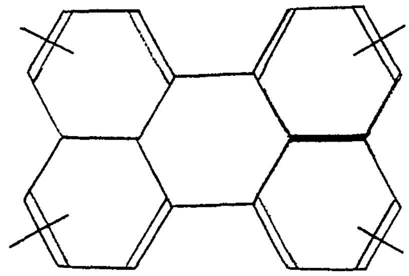 ,

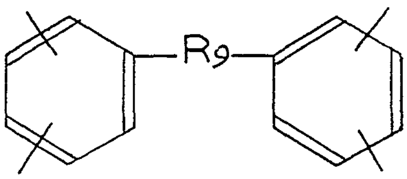

et similaires,

le symbole $R_9$ désignant un reste divalent choisi parmi les radicaux alcoylènes en $C_1$ à $C_3$ et les groupements -O-,

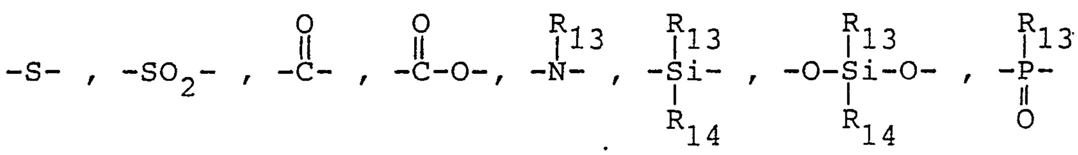

et

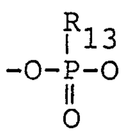 , avec $R_{13}$ et $R_{14}$

désignant des radicaux alcoyles ou aryles et de préférence des radicaux alcoyles inférieurs.

Conviennent tout particulièrement comme agents modificateurs ceux pour lesquels les groupements réactifs sont choisis parmi les groupements $-NH_2$ et amino secondaires de formule $-NHR_{13}$, ces agents modificateurs préférés étant des polyamines aromatiques.

Des exemples de ces agents modificateurs préférés étant notamment tels que :

bis [ (béta-aminoéthylamino) -4 phényl] éther,

bis (béta-amino-t-butyl) -2,4 toluène,

bis (para-béta-amino-t-butylphényl) éther,

m-phénylènediamine,

diamino -3,3' benzidine,

diéthyl -3,5 diamino -2,4 toluène,

diéthyl -3,5 diamino -2,6 toluène,

p-phénylènediamine,

bis (amino-4 phényl) éther,

diamino -4,4' diphénylpropane

diamino -4,4' diphénylméthane,

benzidine,

diamino -4,4' diphénylsulfure,

diamino -3,3' diphénylsulfone,

bis (amino-4 phényl) diéthylsilane.

Les agents modificateurs utilisés suivant l'invention peuvent être incorporés soit au matériau polymère du type polyimide ou polyamide-imide défini précédemment à n'importe quel moment après que ce matériau ait été préparé pour fournir une source de matériau polymère pour la mise en oeuvre du procédé suivant l'invention ou bien encore à l'acide polyamique précurseur dudit matériau polymère. Ainsi, lorsque l'on veut utiliser par exemple un polyimide préimidisé, qui a été préparé par l'une quelconque des techniques connues de polycondensation à l'état fondu ou en milieu solvant, l'agent modificateur peut être incorporé au matériau polymère à n'importe quel moment avant l'utilisation dudit matériau dans le procédé suivant l'invention.

Généralement, l'agent modificateur est incorporé au matériau polymère de la manière qui s'intègre le mieux à la technique utilisée pour fabriquer ledit matériau. Ainsi, par exemple, lorsque l'on emploie une composition du matériau polymère se présentant sous la forme d'une solution ou d'une pâte pour une application du type revêtement ou adhésif, on prépare une solution compatible de l'agent modificateur choisi et incorpore ladite solution à la composition renfermant le matériau polymère. On peut également faire usage d'une solution ou d'une pâte compatible de l'agent modificateur pour incorporer cet agent au matériau polymère lorsque ce dernier est soumis à des opérations d'extrusion et de moulage par injection ou par compression.

Il faut souligner que les composés aromatiques polyfonctionnels, utilisés comme agents modificateurs dans le procédé suivant l'invention, ne réagissent généralement pas avec le matériau polymère dans les conditions ambiantes et que, de ce fait, ils peuvent être incorporés à ce dernier sous toute forme appropriée (produit substantiellement pur, solution, pâte, mélange maître ou autres) à n'importe quel moment après la préparation dudit matériau polymère.

La quantité de l'agent modificateur à utiliser peut varier largement et dépend de divers facteurs incluant, sans s'y limiter, la nature du matériau polymère, la température à laquelle le matériau polymère peut être soumis et l'application à laquelle ledit matériau polymère est destiné. En général, bien que la quantité de l'agent modificateur ne soit pas critique, il est avantageux d'utiliser une quantité molaire de l'agent modificateur ou des agents modificateurs représentant au moins 0,1% environ de la concentration molaire en groupements imides du matériau polymère.

L'invention est illustrée par les exemples suivants donnés à titre non limitatif.

EXEMPLE 1

En faisant appel à la procédure décrite dans le brevet américain N° 4 395 527 on préparait un polyimide renfermant des motifs siloxanes par réaction de quantités sensiblement équimoléculaires de dianhydride de l'acide benzophénone tétracarboxylique de formule

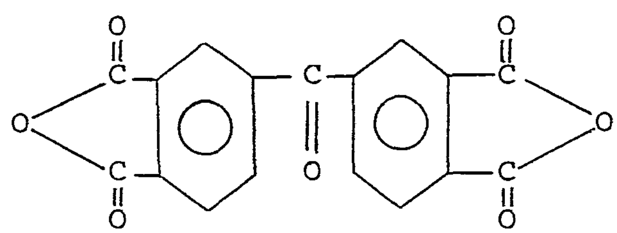

et de bis (m-aminophénoxybutyl) hexadécaméthyloctasiloxane de formule

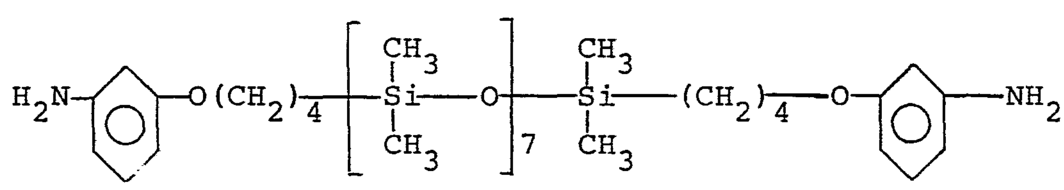

On préparait ensuite une solution à 10% en poids du polyimide ainsi produit dans la N-méthylpyrrolidone (en abrégé NMP) et la solution obtenue était divisée en une série de fractions. A certaines des fractions on ajoutait une amine aromatique polyfonctionnelle, à titre d'agent modificateur, en quantité molaire représentant 5% de la concentration molaire en groupements imides du polyimide présent dans la solution, l'amine étant ajoutée à la fraction de solution de polyimide sous la forme d'une solution dans la NMP.

A partir de chacune des fractions de solution du polyimide renfermant ou non un agent modificateur, on préparait des films par dépôt d'une couche de solution sur la surface d'une plaque de verre puis chauffage à 100°C pendant 1 heure de la plaque ainsi revêtue pour former un film sec.

Des échantillons des divers films ainsi préparés étaient soumis à des chauffages réalisés dans les conditions ci-après :

2 heures à 135°C

2 heures à 180°C

2 heures à 250°C

1 heure à 300°C

Les échantillons des films, après chauffage dans les conditions ci-dessus, étaient soumis à une extraction par du chloroforme effectuée au Soxhlet pendant 24 heures.

On donne dans le tableau I, suivant la nature de l'agent modificateur et les conditions de chauffage, le pourcentage en poids de chaque échantillon de film qui reste insoluble après extraction au chloroforme.

TABLEAU I

| AGENT MODIFICATEUR | % DE POLYIMIDE INSOLUBLE | | | |
|---|---|---|---|---|
| | 135°C | 180°C | 250°C | 300°C |
| AUCUN | 0 | 23 | 77 | 77 |
| m-phénylène diamine (MPDA) | 0 | 46 | 87 | 88 |
| p-phénylène diamine (PPDA) | 0 | 40 | 70 | 94 |
| 4,4' - méthylène dianiline (MDA) | 0 | 69 | 73 | 98 |
| diamino -4,4' - diphényléther (ODA) | 0 | 61 | 81 | 88 |

L'examen des résultats du tableau I met en évidence que le polyimide à motifs siloxanes, soluble dans la NMP, auquel on a incorporé une amine aromatique polyfonctionnelle, voit sa résistance au solvant augmenter substantiellement après chauffage à des températures supérieures à 150°C.

De plus, bien qu'il soit possible d'augmenter la résistance au solvant du polyimide par le seul chauffage de ce dernier, on obtient une augmentation plus importante de cette résistance au solvant en opérant à des températures plus basses (180°C) lorsque le chauffage du polyimide est effectué en présence de l'agent modificateur aminé.

EXEMPLE 2

En utilisant un mode opératoire analogue à celui décrit dans le brevet américain n° 4 395 527, on préparait un polyimide renfermant des motifs siloxanes par réaction de quantités sensiblement équimoléculaires de dianhydride de l'acide bis [ (dicarboxy -3, 4 phénoxy) -4 phényl] sulfure et d'un mélange renfermant, en moles, 55% de bis (m-aminophénoxybutyl)-hexadécaméthyloctasiloxane et 45% de bis [ (p-aminophénoxy) -4 phényl ] sulfone.

On préparait ensuite une solution à 25% en poids du polyimide obtenu dans la NMP et la solution ainsi produite était divisée en une série de fractions auxquelles on ajoutait un agent modificateur consistant en diéthyl-3,5 toluène ou en m-phénylène diamine et utilisé suivant le cas à la dose de 2,5% ou de 5% en poids par rapport au polyimide contenu dans la fraction de solution considérée. L'agent modificateur était dissous dans la NMP avant d'être ajouté à la fraction de solution de polyimide.

A partir de chaque fraction de solution de polyimide renfermant l'agent modificateur, on formait des films par coulée de la solution sur la surface d'une plaque de verre puis chauffage pendant une heure à 60°C et les films obtenus étaient ensuite chauffés à 150°C pendant 1 heure, à 180°C pendant 3 heures et à 210°C pendant 4 heures.

On préparait également des films à partir de fractions de la solution à 25% en poids de polyimide dans la NMP ne renfermant pas d'agent modificateur et soumettait des échantillons de ces films aux chauffages précités.

Après avoir été soumis aux chauffages définis cidessus, aucun des films ne se dissolvait complètement au cours de la phase d'extraction au chloroforme. On observait toutefois qu'après chauffage les films obtenus à partir du

polyimide renfermant l'agent modificateur aminé étaient substantiellement plus insolubles dans le chloroforme que les films préparés à partir du polyimide en l'absence de l'agent modificateur.

EXEMPLE 3

On préparait un polyimide renfermant des motifs siloxanes par réaction de quantités sensiblement équimoléculaires de dianhydride de l'acide benzophénone tétracarboxylique et d'un mélange renfermant, en moles, 65% de 4,4'-méthylène-dianiline et de 35% de bis-gamma aminopropyltétraméthyldisiloxane.

A partir du polyimide ainsi obtenu on préparait une solution à 25% en poids dudit polyimide dans la NMP et divisait la solution obtenue en fractions auxquelles on ajoutait un agent modificateur consistant en m-phénylène diamine ou en diéthyltoluènediamine et utilisé à la dose de 5% en poids par rapport au polyimide contenu dans la fraction de solution considérée.

A partir de chaque fraction de solution de polyimide renfermant l'agent modificateur, on formait des films par coulée de la solution sur la surface d'une plaque de verre puis chauffage pendant 1 heure à 60°C.

On préparait également des films à partir de fractions de la solution à 25% en poids de polyimide dans la NMP ne renfermant pas d'agent modificateur.

Après chauffage à 180°C pendant 3 heures les films obtenus à partir du polyimide renfermant l'agent modificateur ne se dissolvaient pas complètement au cours de l'extraction au chloroforme. Après chauffage dans les mêmes conditions, les films obtenus à partir du polyimide en l'absence d'agent modificateur se révélaient beaucoup plus solubles dans le chloroforme.

EXEMPLE 4

Le polyimide utilisé dans cet exemple renfermait des motifs siloxanes et était préparé, en suivant un mode opératoire analogue à celui décrit dans le brevet américain N° 4 395 527, par réaction de quantités sensiblement équimoléculaires de dianhydride de l'acide bis [ (dicarboxy-3,4 phénoxy) -4 phényl ] sulfure et d'un mélange renfermant, en moles, 65% de bis (m-aminophénoxybutyl) hexadécaméthyl -octasiloxane et 35% de bis [ (p-aminophénoxy)-4 phényl ] -2,2 propane.

On préparait ensuite une solution à 25% en poids du polyimide obtenu dans la NMP et la solution ainsi préparée était divisée en une série de fractions auxquelles on ajoutait des quantités variables d'un agent modificateur, ce dernier étant dissous dans la NMP avant d'être ajouté à la fraction de solution de polyimide.

A partir de chaque fraction de solution de polyimide, on préparait des films par coulée sur la surface d'une plaque de verre puis chauffage pendant 1 heure à 60°C et une heure à 150°C. Les films étaient vieillis par chauffage à 210°C pendant 4 heures puis évalués en utilisant la méthode d'extraction au chloroforme définie dans l'exemple 1.

Le tableau II donne les variations de résistance au solvant des films vieillis soumis à l'extraction au chloroforme en fonction de la nature et de la quantité de l'agent modificateur utilisé.

TABLEAU II

| AGENT MODIFICATEUR | | % de polymère insoluble après vieillissement pendant 4 heures à 210°C |
|---|---|---|
| Nature | Quantité *) | |
| AUCUN | | 31 |
| diéthyl -3,5 toluène diamine | 2,5 | 36,9 |
| | 5 | 36,3 |
| m-phénylène diamine | 2,5 | 48,9 |
| | 5 | 52,2 |

*) - Pourcentage en poids par rapport au polymère

EXEMPLE 5

On préparait un polyimide par réaction de quantités sensiblement équimoléculaires de bis [(p-aminophénoxy)-4 phényl ] sulfone et de dianhydride de l'acide bis [ -(dicarboxy -3,4 phénoxy) -4 phényl ] sulfure.

Les réactifs sous forme pulvérulente étaient mélangés intimement à température ambiante et le mélange obtenu était placé dans un mélangeur Brabender préchauffé à 240°C. Le mélange était alors porté à 300°C avec une vitesse de chauffage de 20°C par minute. Lorsque la chambre de réaction du mélangeur atteignait 300°C, on maintenait le mélange réactionnel, contenu dans ladite chambre, à cette température et sous agitation pendant 0,5 heure, puis on laissait ensuite refroidir ledit mélange réactionnel jusqu'à la température ambiante et récupérait le produit de la réaction.

Le polyimide formé se dissolvait facilement dans la NMP.

On préparait alors une solution à 10% en poids dudit polyimide dans la NMP et la solution obtenue était divisée en une série de fractions. A certaines des fractions obtenues on ajoutait une amine aromatique polyfonctionnelle, à titre d'agent modificateur, en quantité molaire représentant 5% de la concentration molaire en groupements imides du polyimide présent dans la fraction considérée, l'amine étant ajoutée à ladite fraction sous la forme d'une solution dans la NMP.

A partir de chacune des fractions de solution de polyimide renfermant ou non un agent modificateur, on préparait des films par revêtement, par la solution, de la surface d'une plaque de verre puis chauffage, pendant 1 heure à 100°C, de la plaque ainsi revêtue pour former un film sec.

Des échantillons des divers films ainsi préparés étaient soumis à des chauffages réalisés dans les conditions ci-après :

2 heures à 130°C

2 heures à 180°C

2 heures à 250°C

1 heure à 300°C

Les échantillons des films, après chauffage dans les conditions ci-dessus, étaient soumis à une extraction par du chloroforme effectuée au Soxhlet pendant 24 heures.

On donne dans le tableau III, suivant la nature de l'agent modificateur et les conditions de chauffage, le pourcentage en poids de chaque échantillon de film qui reste insoluble après extraction au chloroforme.

TABLEAU III

| AGENT MODIFICATEUR | % de polymère insoluble dans le chloroforme | | |
|---|---|---|---|
| | 130°C | 250°C | 300°C |
| AUCUN | 0 | 0 | 30 |
| MPDA | 0 | 62 | 77 |
| PPDA | 0 | 33 | 100 |
| MDA | 0 | 59 | 87 |
| ODA | 0 | 48 | 100 |

L'examen des résultats présentés dans le tableau III met en évidence que le polyimide thermoplastique soluble auquel on a ajouté un agent modificateur aminé voit sa résistance au solvant augmenter substantiellement après chauffage à des températures supérieures à 150°C.

**Revendications**

1 -Procédé pour la modification des propriétés d'un matériau polymère choisi parmi les polyimides, les polyamide-imides et les polymères de l'un ou l'autre de ces deux types renfermant des motifs siloxanes dans leurs chaînes, caractérisé en ce que l'on soumet le matériau polymère ou un acide polyamique précurseur dudit matériau à un chauffage à une température au moins égale à 150°C et inférieure à la température à laquelle intervient une décomposition du matériau polymère, ledit chauffage étant effectué en présence d'au moins un agent modificateur choisi parmi les composés aromatiques polyfonctionnels, qui renferment au moins deux groupements réactifs choisis parmi $-NH_2$, -COOH, -OH et les groupements amino

secondaires avec au moins l'un desdits groupements réactifs consistant en $-NH_2$ ou -COOH.

2 -Procédé suivant la revendication 1, caractérisé en ce que le matériau polymère soumis au chauffage est thermoplastique.

3 -Procédé suivant la revendication 1 ou 2, caractérisé en ce que le matériau polymère soumis au chauffage est soluble dans les solvants conventionnels.

4 -Procédé suivant l'une des revendications 1 à 3, caractérisé en ce que le matériau polymère renferme dans ses chaînes un motif siloxane de formule

$$-Q-Z-D-\overset{R_1}{\underset{R_1}{Si}}-\left[O-\overset{R_2}{\underset{R_2}{Si}}\right]_x-\left[O-\overset{R_3}{\underset{R_4}{Si}}\right]_y-\left[O-\overset{R_5}{\underset{R_6}{Si}}\right]_z-O-\overset{R_1}{\underset{R_1}{Si}}-D-Z-Q-$$

dans laquelle

Q est un groupement aromatique substitué ou non substitué,

Z désigne un groupement $-O-$ , $-S-$ , $-\overset{\overset{O}{\|}}{S}-$ , $-\overset{\overset{O}{\|}}{\underset{\underset{O}{\|}}{S}}-$ , $-\overset{\overset{O}{\|}}{\underset{\underset{O}{\|}}{S}}NH-$ ,

$-NH\overset{\overset{O}{\|}}{\underset{\underset{O}{\|}}{S}}-$ , $-\overset{\overset{O}{\|}}{C}NH-$ , $-HN\overset{\overset{O}{\|}}{C}-$ , $-\overset{\overset{O}{\|}}{C}-O-$, ou $-O-\overset{\overset{O}{\|}}{C}-$,

D représente un radical hydrocarbylène substitué ou non substitué,

$R_1$, $R_2$, $R_3$, $R_4$ $R_5$ et $R_6$ désignent chacun indépendamment un radical hydrocarbyle substitué ou non substitué, et x, y et z sont des nombres ayant chacun indépendamment une valeur allant de zéro à 100.

5 -Procédé suivant la revendication 4, caractérisé en ce que dans la formule du motif siloxane

Q est un groupement carbocyclique aromatique possédant 6 à 18 atomes de carbone dans le noyau ou encore un groupement hétérocyclique aromatique ayant de 5 à 18 atomes dans le noyau et comportant au moins un hétéréatome choisi parmi N, O et S, lesdits groupements carbocyclique et hétérocyclique aromatiques étant non substitués ou encore substitués par un ou plusieurs substituants choisis parmi les radicaux alcoyles en $C_1$ à $C_{12}$, alcényles en $C_2$ à $C_{12}$, alcynyles en $C_2$ à $C_{12}$, cycloalcoyles en $C_4$ à $C_8$, alcoxy en $C_1$ à $C_{12}$, alcoylthio en $C_1$ à $C_{12}$, phényle, alcoylphényles ayant de 1 à 12 atomes de carbone dans le reste alcoyle, phénoxy, phénylthio, alcoylcarbonyloxy en $C_2$ à $C_{12}$, phénylalcoyles ayant de 1 à 12 atomes de carbone dans le reste alcoyle, alcoylcarbonyles en $C_2$ à $C_{12}$, alcoxycarbonyles en $C_2$ à $C_{12}$, bromo, chloro, fluoro, iodo, nitro, cyano, cyanothio, carboxy, carbonyle, hydroxyle, mercapto, formyle, thioformyle et mercaptocarbonyle,

D est un radical hydrocarbylène substitué ou non substitué en $C_1$ ou en $C_3$ à $C_{18}$, et

$R_1$, $R_2$ $R_3$, $R_4$, $R_5$ et $R_6$ représentent chacun, indépendamment, un radical choisi parmi les radicaux hydrocarbyles comprenant les radicaux alcoyles en $C_1$ à $C_{12}$, alcényles en $C_2$ à $C_{12}$, alcynyles en $C_2$ à $C_{12}$, cycloalcoyles en $C_4$ à $C_8$, phényle, alcoylphényles ayant 1 à 12 atomes de carbone dans le reste alcoyle, phényl alcoyles ayant de 1 à 12 atomes de carbone dans le reste alcoyle, alcénylphényles ayant de 2 à 12 atomes de carbone dans le reste alcényle, et les radicaux dérivant de l'un ou l'autre des radicaux hydrocarbyles précités par substitution d'un ou plusieurs de leurs atomes d'hydrogène par Br, Cl, F,

I, -NC, $-NO_2$, -OCN, alcoxy en $C_1$ à $C_8$ , $-S-R_d$ ,

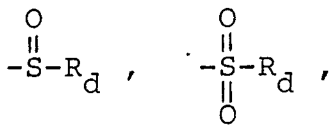 , $-S-S-R_d$ , -COOH , -COSH , -CSOH ,

$-CONH_2$ , - CN , -CHO , -CHS , -OH , -SH, -NCO

et 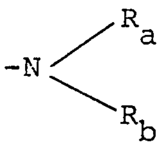

où $R_a$ et $R_b$ représentent chacun indépendamment un atome d'hydrogène ou un radical alcoyle inférieur et $R_d$ est un alcoyle en $C_1$ à $C_8$.

6 -Procédé suivant la revendication 5, caractérisé en ce que dans la formule du motif siloxane

Q est un groupement carbocyclique aromatique substitué ou non substitué et possédant 6 à 18 atomes de carbone dans le noyau,

D est un radical alcoylène linéaire ou ramifié en $C_1$ ou en $C_3$ à $C_{12}$et x, y et z sont chacun égaux à zéro.

7 -Procédé suivant la revendication 6, caractérisé en ce que le motif siloxane a la formule

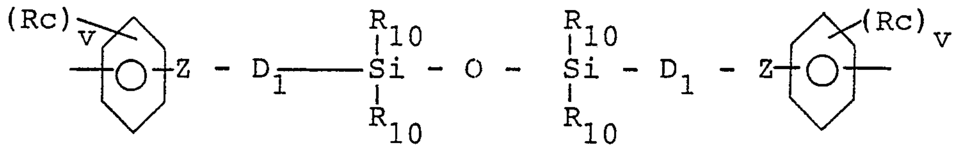

dans laquelle

v est un nombre allant de zéro à 4,

les Rc, identiques ou différents, sont choisis parmi les radicaux alcoyles inférieurs, alcényles inférieurs, alcynyles inférieurs, cycloalcoyles en $C_4$ à $C_8$, alcoxy inférieurs, alcoylthio inférieurs, phényle, alcoylphényles inférieurs, phénylalcoyles inférieurs, alcénylphényles inférieurs, phénoxy, phénylthio, alcoylcarbonyles inférieurs, alcoylcarbonyloxy inférieurs, alcoxycarbonyles inférieurs, bromo, chloro, fluoro, iodo, nitro, cyano, cyanothio, carboxyle, carbonyle, hydroxyle, mercapto ou mercaptocarbonyle,

Z est un groupement divalent

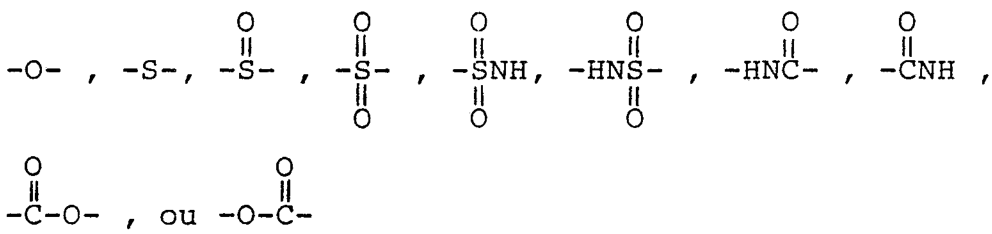

$D_1$ est un radical méthylène ou un radical alcoylène en $C_3$ à $C_8$, et

$R_{10}$ est un radical choisi parmi les radicaux alcoyles inférieurs, alcényles inférieurs, alcynyles inférieurs, phényle, alcoylphényles inférieurs, phénylalcoyles inférieurs et alcénylphényles inférieurs.

8 -Procédé suivant la revendication 7, caractérisé en ce que dans la formule du motif siloxane v est égal à zéro ou 1 et $R_{10}$ désigne un radical alcoyle inférieur.

9 -Procédé suivant la revendication 7, caractérisé en ce que dans la formule du motif siloxane v est égal à zéro ou 1, Z représente le groupement -O-et $R_{10}$ désigne un radical alcoyle inférieur.

10 -Procédé suivant la revendication 7, caractérisé en ce que dans la formule du motif siloxane v est égal à zéro ou 1, Z représente le groupement -O-, $D_1$ désigne un radical méthylène, propylène ou butylène et $R_{10}$ est un radical alcoyle en $C_1$ à $C_3$.

11 -Procédé suivant la revendication 7, caractérisé en ce

que dans la formule du motif siloxane v est égal à zéro, Z représente le groupement -O-, $D_1$ est un radical méthylène ou butylène et $R_{10}$ désigne un radical méthyle.

12 -Procédé suivant la revendication 5, caractérisé en ce que dans la formule du motif siloxane

Q est un groupement divalent carbocyclique aromatique substitué ou non substitué ayant 6 à 18 atomes de carbone dans le noyau,

D est un radical alcoylène linéaire ou ramifié en $C_1$ ou en $C_3$ à $C_{12}$,

x, y et z ont des valeurs telles que $0 \leq x \leq 100$, $0 \leq y \leq 20$ et $0 \leq Z \leq 20$.

13 -Procédé suivant la revendication 12, caractérisé en ce que dans la formule du motif siloxane

$R_1$ est un radical hydrocarbyle non substitué en $C_1$ à $C_{18}$,

$R_2$ est un radical alcoyle en $C_1$ à $C_{12}$,

$R_3$ représente un radical phényle, alcoylphényle en $C_7$ à $C_{18}$ ou alcoyle en $C_1$ à $C_{12}$,

$R_4$ est un radical alcoyle en $C_1$ à $C_{12}$, phényle, alcoylphényle en $C_7$ à $C_{18}$ ou alcényle en $C_2$ à $C_{12}$ $R_5$ est un radical alcényle en $C_2$ à $C_{12}$ ou un radical alcoyle substitué en $C_1$ à $C_{12}$, et

$R_6'$ est un radical alcoyle en $C_1$ à $C_{12}$, phényle, alcoylphényle en $C_7$ à $C_{18}$ ou alcényle en $C_2$ à $C_{12}$.

14 -Procédé suivant la revendication 5, caractérisé en ce que dans la formule du motif siloxane

Q est un groupement divalent hétérocyclique aromatique ayant 5 à 18 atomes et comportant au moins un hétéroatome choisi parmi N, S et O, ledit groupement étant non substitué ou substitué,

D est un radical alcoylène linéaire ou ramifié en $C_1$ ou en $C_3$ à $C_{12}$, et

x, y et z, identiques ou différents, ont chacun une valeur allant de zéro à 100.

15 -Procédé suivant l'une des revendications 1 à 3, caractérisé en ce que le matériau polymère est un polyimide ou un polyamide-imide renfermant le produit de réaction d'un acide organique, d'un anhydride d'acide organique ou d'un acide-anhydride avec un bisamino-polysiloxane de formule

$$H_2N-Q-Z-D-\underset{R_1}{\overset{R_1}{Si}}-\left[O-\underset{R_2}{\overset{R_2}{Si}}\right]_x-\left[O-\underset{R_4}{\overset{R_3}{Si}}\right]_y-\left[O-\underset{R_6}{\overset{R_5}{Si}}\right]_z-O-\underset{R_1}{\overset{R_1}{Si}}-D-Z-Q-NH_2$$

dans laquelle

Q est un groupement aromatique divalent substitué ou non substitué,

Z désigne un groupement divalent $-O-$ , $-S-$ , $-\overset{O}{\overset{\|}{S}}-$ ,

$-\underset{O}{\underset{\|}{\overset{O}{\overset{\|}{S}}}}-$ , $-\underset{O}{\underset{\|}{\overset{O}{\overset{\|}{S}}}}NH-$ , $-HN\underset{O}{\underset{\|}{\overset{O}{\overset{\|}{S}}}}-$ , $-HN\overset{O}{\overset{\|}{C}}-$ , $-\overset{O}{\overset{\|}{C}}NH-$ , $-\overset{O}{\overset{\|}{C}}-O-$ ou $-O-\overset{O}{\overset{\|}{C}}-$,

D est un radical hydrocarbylène substitué ou non substitué

$R_1$, $R_2$, $R_3$, $R_4$, $R_5$ et $R_6$ désignent chacun indépendamment un radical hydrocarbyle substitué ou non substitué, et

x, y et z ont chacun indépendamment une valeur allant de zéro à 100.

16 -Procédé suivant la revendication 4, caractérisé en ce que le matériau polymère est un polyimide renfermant le produit de réaction d'une composante dianhydride avec une composante amine, la composante dianhydride comportant un dianhydride de formule

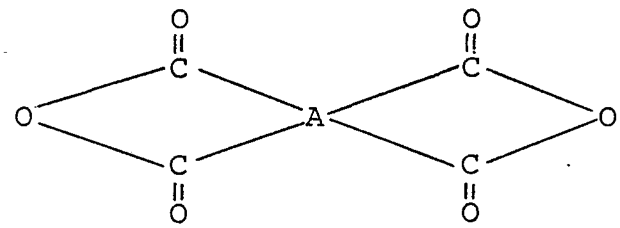

dans laquelle A désigne un noyau benzénique ou naphtalénique ou un groupe tétravalent de formule

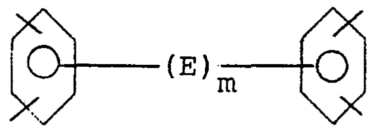

ou

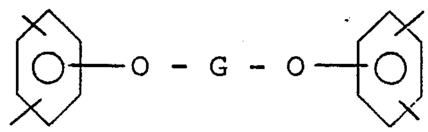

avec G désignant un radical phénylène ou un groupement de formule

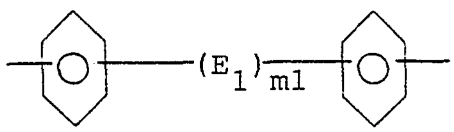

m et $m_1$ étant chacun égaux à zéro ou 1, et E et $E_1$ représentant un reste divalent -O-, -S-,

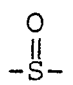 , 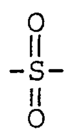 , 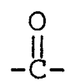 ou - $C_sH_{2s}$- avec s désignant un nombre entier allant de 1 à 8, tandis que la composante amine comporte un bisamino polysiloxane et éventuellement une diamine organique, ledit bisamino-ppolysiloxane ayant la formule

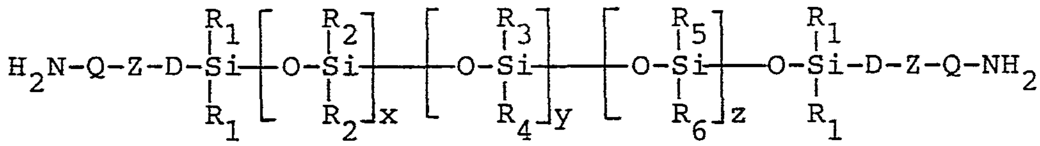

dans laquelle

Q designe un groupement divalent aromatique substitué ou non substitué,

Z est un groupement divalent 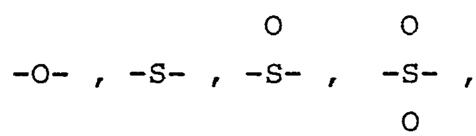

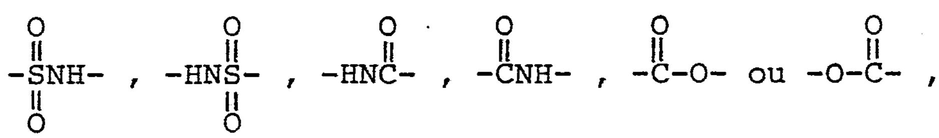

D est un radical hydrocarbylène substitué ou non substitué en $C_1$ ou en $C_3$ à $C_{18}$,

$R_1$, $R_2$, $R_3$, $R_4$, $R_5$ et $R_6$ désignent chacun indépendamment un radical hydrocarbyle substitué ou non substitué, et

x, y et z ont chacun indépendamment une valeur allant de zéro à 100,

tandis que ladite diamine organique possède la formule

$H_2N$ -Y -$NH_2$

dans laquelle Y représente un groupement diphénylène, phénylène, naphtylène ou un groupement de formule

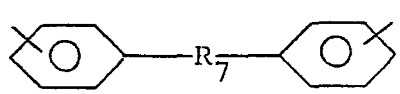

dans laquelle $R_7$ désigne un groupement divalent choisi parmi les radicaux alcoylènes linéaires ou ramifiés en $C_1$ à $C_{20}$,

les groupements

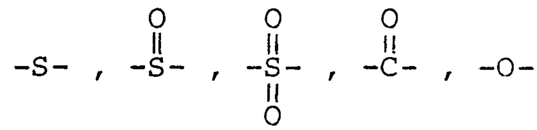

et les groupements -O-G'-O-pour lesquels G' est un radical phénylène ou un radical de formule

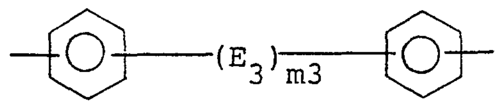

dans laquelle $m_3$ est égal à zéro ou 1 et $E_3$ est choisi parmi

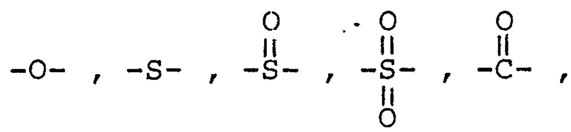

et les radicaux linéaires ou ramifiés en $C_1$ à $C_8$.

17 -Procédé suivant l'une des revendications 1 à 3, caractérisé en ce que le matériau polymère est un polyimide ou un polyamid-imide renfermant dans ses chaînes un motif siloxane de formule

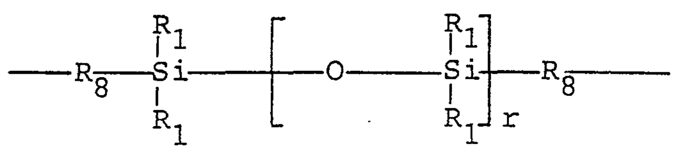

dans laquelle $R_8$ est un radical divalent hydrocarboné, $R_1$ est un radical monovalent hydrocarboné et r est un nombre entier égal ou supérieur à 1.

18 -Procédé suivant l'une des revendications 1 à 3, caractérisé en ce que le matériau polymère est un polyimide ou un polyamide-imide renfermant le produit de réaction d'un acide organique, d'un anhydride d'acide organique ou d'un acide-anhydride avec une diamine organique de formule $H_2N$ -Y $-NH_2$, dans laquelle Y est un radical phénylène, diphénylène, naphtylène ou un groupement de formule

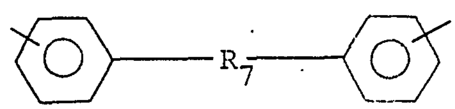

dans laquelle $R_7$ désigne un groupement divalent choisi parmi les radicaux alcoylènes linéaires ou ramifiés en $C_1$ à $C_{20}$, les groupements

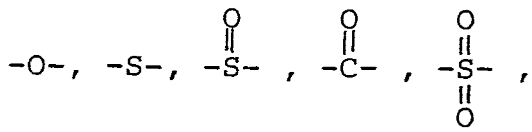

et les groupements -O-G'-O-pour lesquels G' est un radical phénylène ou un groupe de formule

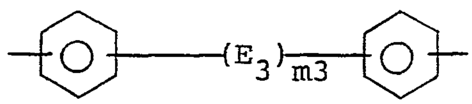

dans laquelle $m_3$ est égal à zéro ou 1 et $E_3$ est choisi parmi

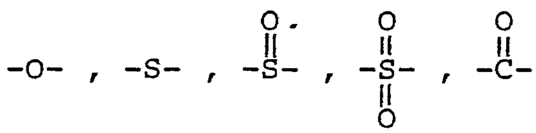 et les radicaux

alcoylènes linéaires ou ramifiés en $C_1$ à $C_8$.

19 -Procédé suivant la revendication 18, caractérisé en ce que le polyimide ou le polyamide-imide comporte le produit de réaction d'une diamine organique avec une composante dianhydride renfermant un dianhydride de formule

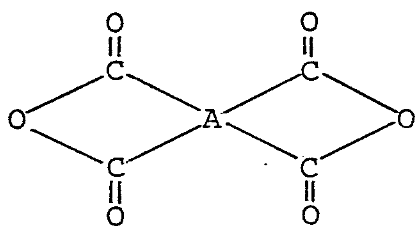

dans laquelle A désigne un reste tétravalent benzénique ou naphtalénique ou un groupement tétravalent de formule

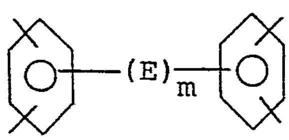

ou

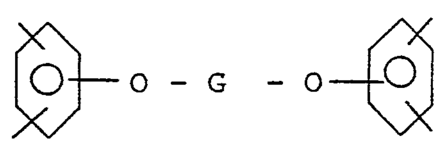

avec G désignant un radical phénylène ou un groupement de formule

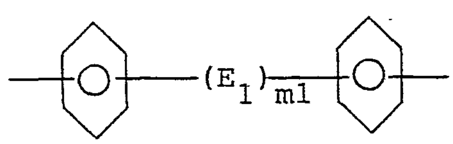

m et $m_1$ étant chacun égaux à zéro ou 1, E et $E_1$ représentant chacun un reste divalent choisi parmi

$$-O- \ , \ -S- \ , \ -\overset{\overset{O}{\|}}{S}- \ , \ -\underset{\underset{O}{\|}}{\overset{\overset{O}{\|}}{S}}- \ , \ -\overset{\overset{O}{\|}}{C}- \quad \text{ou} \ -C_sH_{2s}-$$

avec s désignant un nombre entier allant de 1 à 8.

20 -Procédé suivant l'une des revendications 1 à 19, caractérisé en ce que l'agent modificateur est choisi parmi les polyamines aromatiques, les aminoacides aromatiques, les acides polycarboxyliques aromatiques, les aminophénols et les phénols carboxylés.

21 -Procédé suivant l'une des revendications 1 à 20, caractérisé en ce que le noyau des composés aromatiques polyfonctionnels utilisables comme agents modificateurs sont des radicaux aromatiques di-, tri-ou tétravalents renfermant de 6 à 20 atomes de carbone.

22 -Procédé suivant l'une des revendications 1 à 21, caractérisé en ce que les agents modificateurs sont ceux pour lesquels les groupements réactifs sont choisis parmi les groupements $-NH_2$ et $-NHR_{13}$, avec $R_{13}$ désignant un radical alcoyle ou aryle et de préférence un radical alcoyle inférieur.

Office européen des brevets

# RAPPORT DE RECHERCHE EUROPEENNE

Numéro de la demande

EP 86 40 0426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 274 155 (F.C. SAUNDERS et al.)<br>* En entier *<br>--- | 1 | C 08 G 73/10<br>C 08 G 73/14<br>C 08 G 77/42<br>C 08 J 3/00 |
| Y | US-A-4 167 620 (YU-TSAI CHEN)<br>* Revendications *<br>--- | 1 | |
| A | CHEMICAL ABSTRACTS, vol. 67, 1967, page 9473, abrégé no. 100498v, Columbus, Ohio, US; Ya. S. Vygodskii et al.: "Thermal treatment of polyimides above 200 " & VYSOKOMOL. SOEDIN., SER. B 9(8), 587-90(1967)<br>* Résumé *<br>--- | | |
| | | | DOMAINES TECHNIQUES RECHERCHES (Int. Cl.4) |
| A | CHEMICAL ABSTRACTS, vol. 81, 1974, page 41, abrégé no. 14289k, Columbus, Ohio, US; & JP - A - 73 89 957 (TORAY INDUSTRIES, INC.) 24.11.1973<br>* Résumé *<br>--- | | C 08 G<br>C 08 J |
| A | CHEMICAL ABSTRACTS, vol. 91, 1979, page 25, abrégé no. 212177s, Columbus, Ohio, US; & US - A - 4 167 620 (STANDARD OIL Co. (Indiana)) 11.09.1979<br>* Résumé *<br>----- | | |

Le présent rapport de recherche a été établi pour toutes les revendications

| Lieu de la recherche | Date d'achèvement de la recherche | Examinateur |
|---|---|---|
| LA HAYE | 22-05-1986 | LEROY ALAIN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant